# EUROPEAN PATENT SPECIFICATION

(11) **EP 2 914 376 B1**
(45) Date of publication and mention of the grant of the patent: **01.03.2017**
(21) Application number: 13785868.4
(22) Date of filing: 01.11.2013
(51) Int. Cl.: B01J 13/04, F28D 20/02, C09K 5/06, F28D 20/00

(54) **CAPSULE COMPRISING PHASE CHANGE MATERIAL, ASSEMBLY OF CAPSULES AND METHOD OF FORMING THE CAPSULE**
KAPSEL MIT EINEM PHASENWECHSELMATERIAL, ANORDNUNG SOLCHER KAPSELN, UND VERFAHREN ZU IHRER HERSTELLUNG
CAPSULE COMPRENANT UN MATÉRIAU À CHANGEMENT DE PHASE, ASSEMBLAGE DE CAPSULES, ET PROCÉDÉ DE FABRICATION

(30) Priority: 05.11.2012 EP 12191312
(43) Date of publication of application: 09.09.2015
(73) Proprietor: Flamco B.V., 3751 LJ Bunschoten (NL)
(72) Inventor: CNOSSEN, Jan Henk, NL-8723 CP Koudum (NL); REEZIGT, Herman, NL-8072 HJ Nunspeet (NL); DEVLIN, Terrence Arthur, NL-7312 AP Apeldoorn (NL)
(74) Representative: Grootscholten, Johannes A.M.
(86) International application number: PCT/EP2013/072877
(87) International publication number: WO 2014/068091

(56) References cited:
- DE-A1-102010 025 297
- JP-A- S6 245 680
- JP-A- S63 273 787
- JP-A- S63 309 580
- US-A- 4 513 053
- US-B1- 6 270 836

## Description

The present invention relates to a capsule, having a core comprising phase changing material (PCM), as well as an assembly of a plurality of such capsules, for use in a buffer, and a production method for manufacturing such capsules or assemblies.

The invention is based on the insight that the buffers in heating systems or heat exchange systems, like central heating systems, are usually filled with heat exchange fluids, like water. However, water and other usual heat exchange fluids have a limited heat capacity. According to the inventors of the present invention, it has been reported that phase change materials could be employed to enhance the heat capacity of a buffer, but to date no viable embodiment has been encountered.

For example, DE-10 2010 025297 relates to use of activated silicon having a solvent and other fluids included therein for the skin, which frees solvents and/or the other fluids into the PCM of the core after having been applied thereon. Further, DE-100 58 101 discloses a capsule having a core of PCM to which graphite may be added. Material for the core is supplied through an extruder or injector, which necessarily requires use of a solvent, such as paraffin. The presence of such a solvent fluid inside the core will inhibit a desired behaviour of the PCM in the core for storage of heat therein, as paraffin influences and even affects phase transitions of the PCM. Likewise, US4513053 and EP2119498 relate to use of polypropylene or the like as a coating or skin, wherein a solvent is necessary to be added to a base material for the coating or skin. Such solvent will be freed into the PCM after application of the coating or skin onto the core, where freed solvents or other fluids will affect the heat storing capacity or phase changing ability of the core material.

Consequently, to meet the needs of buffer builders and users, according to the present invention a capsule according to claim 1 and an assembly of capsules are provided. Since the loose core material is to be processed according to the present invention to be form retaining, for example in the shape of a ball, a cube, a tube, a cylinder and the like, the shape of the core can be maintained through a subsequent process step of applying the skin.

As a consequence of these features of the present invention in relation to a capsule, it has become possible to enhance or increase heat capacity of a buffer by arranging the capsules therein, preferably though not exclusively in combination with the heat exchange fluid, which is still necessary to transfer heat from the buffer to other components of the heat exchanger system. The watertight skin prevents the phase change material from coming into contact with the heat exchange fluid, which would diminish the potential increase in heat capacity of a buffer. As a consequence of the feature that the phase change material of the core is, in dry conditions and without the skin, at least temporarily form-retaining, arranging the skin on the core is greatly facilitated to an extent where handling of the core in isolation prior to arranging the skin is possible. Injection moulding is employed for arranging the skin on or around the core in one-part whereas any and all prior art configurations rely on a two or more than two part combination of the skin and the steps for arranging the skin onto the core, to form or define a skin of a capsule. By creating a one piece skin, watertight properties to protect the core material from fluids and the like, will be enhanced relative to the available prior art, whilst prior art interface regions between separately applied skin parts are prone to allow leakages and the like.

Form-retention can be achieved in one or more than one of many different manners, such as adding binder to, or compression of the phase change material of the core, and the like.

Within the scope of protection for the present invention as defined in the appended independent claims, many preferred but not limiting embodiments are possible, some of which have been defined in appended dependent claims.

For instance, in a preferred embodiment the core comprises salt hydrate. This is a very suitable phase change material, to be incorporated in a capsule according to the present invention, since heat capacity thereof surpasses that of water very considerably, but further also has a far superior heat capacity in terms of - for instance - enthalpy of fusion, than paraffin, sugar alcohol, regular salts, etc.

According to the present invention, the core comprises graphite. Addition of graphite to the phase change material will enhance cohesion of the phase change material and heat storage and heat transfer through the phase change material. Additionally, a binder can be employed, preferably a binder exhibiting excellent heat transfer properties, and graphite or an alternative heat transfer enhancing additive may serve as a binder for the phase change material. With a binder, cohesion of the phase change material can be improved, and consequently also immediately the heat transfer properties of the phase change material in conjunction with the binder as well as the resulting heat capacity of the resulting capsule. For the binder, use can be made of one of a plurality of materials, and merely as an example here is mentioned hydrophilic polymers and Superabsorbent Polymers (SAP), such as polyacrylamid, polyacrylic acid, polyvinylalcohol and cellulose based polymers. For a general description of SAP, reference is made to http://en.wikipedia.org/wiki/Superabsorbent_polymer.

According to the present invention, the core comprises compressed phase change material. By compressing the phase change material, the core can be given a shape and form best suitable for a subsequent step of applying the watertight skin on and around the core. Naturally a binder would or at least could contribute to the stability of a core in terms of its shape, prior to the watertight skin being applied to harness or at least encapsulate the phase change material in a desired shape and form and having desired dimensions.

In an additional or alternative preferred embodiment of a capsule according to the present invention, the skin has a thickness of between 10 and 600 µm, preferably between 20 and 580 µm, more preferably between 50 and 550 µm, and most preferably between 100 and 500 µm. Such relatively thin watertight skins contribute to the desired feature of encapsulating as much phase change material as possible, while still being able to ensure outer dimensions of the resulting capsule, which under circumstances can be expected to have a maximum. Such relatively small thicknesses surprisingly suffice to ensure long term watertight properties of the capsules, in particular in non-restrictive embodiments having a one part or one piece skin arranged onto and/or around the core.

For instance, in yet another alternative or additional preferred embodiment of the capsule according to the invention, a size thereof in at least one dimension, in particular a diameter, is smaller than a buffer or vessel connection, preferably smaller than 22 mm. In such a preferred embodiment, it is possible to transport a buffer or tank or vessel separate from the capsules, and the capsules can be introduced into the storage space defined by the buffer, tank or vessel at its destination. As a consequence, the weight of the buffer, tank or vessel to be transported can be reduced. In particular it is noted, that such a buffer, tank or vessel will normally be connected to the heat exchange system through a connection or a connector, usually having standard dimensions, such as 15 or 22 mm. As a consequence, the capsules in this preferred embodiment of the present invention can be introduced into the interior of the buffer, tank or vessel through the connection or connector, which will then subsequently served to connect the buffer, tank or vessel to the heat exchange system to become a part thereof, after filling with heat exchange fluid. The size of the capsules should be chosen such, that with certainty the capsules can be introduced into the interior of the buffer, tank or vessel, without the watertight skin being affected by puncture or rupture or other damage in contact with the rim of a connection or connector.

According to the present invention, the skin comprises a skin material of PP Polypropylene. Polypropylene is considered to be an excellent choice for moulding, naturally with appropriate adaptations in relation to such manners of applying the watertight skin onto the core. According to the present invention, the skin is applied around the core through injection moulding of the skin around the core after arranging the core in a mould cavity.

In yet another alternative or additional embodiment the capsule according to the present invention further comprises an extension protruding from the capsule. Such an extension may form a part of the core of phase change material or of the skin on and around the core, and is considered to be very useful for manoeuvring, handling and/or transporting of the resulting capsules and/or even of the intermediate products during production of the capsules.

As previously indicated, the present invention also relates to an assembly of at least two capsules according to the present invention, wherein the capsules are connected to form an elongate string or array of capsules. Such a string or array of capsules can be introduced into an interior of a buffer, tank or vessel, one capsule at a time but with the assembly intact after inserting all of the capsules in the string or array, and the assembly may even be suspended or tensioned in this interior of the buffer, tank or vessel for at least temporarily storage of heat in the capsules. Strings of capsules may be more easily introduced into the buffer, tank or vessel, for example through an access, that can be easily made available for introduction of such string of capsules, for example a regular input connection to attach a conduit or the like of for instance a heating system and connect such a conduit or the like to the interior of the buffer, tank or vessel, provided the capsules fit through such a connection, without having to disassemble the buffer, tank or vessel, for which reason elsewhere not limiting dimensions of the capsules are mentioned in the present disclosure. Moreover, when the string is attached inside the buffer, tank or vessel, preferably near the connection, the string can also be easily retracted to be replaced or repaired or otherwise maintained. Alternatively, it is possible to break the connections between the capsules in a string or array to separately introduce the capsules into the interior of the buffer, tank or vessel, for instance by cutting or breaking such connections.

It is noted in this respect, that in an embodiment of a capsule exhibiting an extension and an assembly of capsules, the extension can form the connection between the capsules. Consequently, this embodiment of an assembly is elegant and simple. For instance, when producing the assembly, using up moulding process for applying the watertight skin onto and around the core, the extension forming a connection between the capsules can be moulded at the same time as applying the watertight skin onto and around the

As indicated herein above, the present invention can be used for a buffer, comprising: a tank or vessel, defining an internal storage for at least a heat exchange fluid and comprising a buffer connection for connection to an external heat exchange system; and at least one capsule according to the above described aspect of the present invention or an assembly according to yet another above described aspect of the present invention. The buffer may contain discrete capsules or strings or arrays of capsules in assemblies, possibly suspended or tensioned within the interior space of the tank, vessel or buffer to allow storage of heat in the capsules, which are in use in the tank, vessel or buffer in contact with the heat exchange liquid or even submerged therein.

According to yet another aspect of the present invention, and as indicated above, the present invention also relates to a method of forming a capsule according to an above described aspect of the present invention, comprising: forming a core of phase changing material; and arranging an encapsulating watertight skin arranged around the core, wherein forming the core comprises processing the phase change material to be at least temporarily form-retaining in dry conditions and without the skin.

The step of forming the core comprises adding graphite to the phase change material.

The step of forming the core comprises compressing the phase change material. Thereby, air can be expelled from the core and a predefined shape of the core can be achieved. The presence of air inside the core could decrease the resulting heat capacity and transfer of a capsule, and a well defined intermediate shape of the core, prior to applying the watertight skin material on and around the core, has an evident beneficial influence on the subsequent step of applying the watertight skin material on and around the core. For instance, when a mould process is employed to arrange the watertight skin material on and around the core, which has accurate predefined dimensions, the thickness of the skin can be kept small so that a maximum amount of phase change material can be encapsulated in the capsule and the skin will then, as a consequence of the small thickness thereof, pose a minimal barrier for transfer of heat their through to the interior or core of the capsule or there from.

In yet another additional or alternative embodiment of the method according to the present invention, forming the core and arranging the skin comprises dimensioning the capsule to a size thereof in at least one dimension, in particular a diameter, which is smaller than a buffer or vessel connection, preferably smaller than 22 mm or 15 mm.

The step of arranging the skin comprises moulding of the skin around the core in a mould cavity after arranging the core in the mould cavity.

In yet another additional or alternative preferred embodiment of a method according to the present invention, the method further comprises arranging an extension protruding from the capsule during the step of forming the core and/or the step of arranging the skin on and around the core.

In yet another additional or alternative preferred embodiment of a method according to the present invention, using mould process, the method comprises arranging a core of phase change material in the mould cavity part in a first mould part; closing the mould using at least one second mould part; applying a thermoplastic skin material under pressure in a first direction; and applying thermoplastic skin material under pressure in a second direction essentially opposite the first direction relative to the core in the mould cavity. As a result of this preferred embodiment of the method, all sides around the circumference of the core will be provided with a suitable thickness of skin material, even when the core comprising the phase change material could rest against an interior surface of the mould cavity and consequently hinder application of skin material at such a resting position. If thermoplastic skin material under pressure is applied simultaneously in both the first direction and the second direction, the pressure could suffice to centre the core of the capsule within the mould cavity and allow application of thermoplastic skin material evenly and having a uniform thickness around the circumference thereof.

However, as an alternative to simultaneous application of the thermoplastic skin material on and around the core and to even better ensure an even and uniform thickness of the skin material on and around the core, applying the thermoplastic skin material in the first and second directions may be performed in subsequent moulding steps.

In such an embodiment having subsequent moulding steps at least one of the first and second mould halves is replaced for a latter of the subsequent moulding steps. A mould halve to be substituted between subsequent moulding steps can define a mould cavity, which is closely corresponding to the outer size and shape of the core during the first moulding step, and the replacing mould halve may have larger dimensions to allow for the thickness of the thermoplastic skin material and thus define an even and uniform skin thickness around the circumference of the capsule.

In an embodiment of the present invention, the method for manufacturing capsules having an extension in a process based on moulding, the method may comprise moulding the extension. Moulding the extension can be performed simultaneously with applying in a mould process of the watertight skin of the capsule. The extension can form a connection to a neighbouring capsule in a string or array of capsules, forming an assembly in another aspect of the present invention.

In an embodiment of the method according to the present invention, based on a mould process and with at least one extension on at least one of the capsules, the method may comprise manoeuvring the capsule by engaging the extension as a grip. This can be beneficial during production, for instance for handling the capsule, for instance for taking the capsule or string of capsules from a mould or mould halve after or during the production process.

Yet another additional or alternative preferred embodiment of a method according to the present invention, could be comprising arranging a form-retaining core of phase change material on a support, which optionally comprises a plurality of support elements, in a mould cavity part in a first mould part; closing the mould using at least one second mould part, optionally also comprising a support; and applying a thermoplastic skin material under pressure to the mould cavity. By arranging the core on the support, the core may be kept in alignment with walls of the moulding cavity, for example for elongate embodiments, but in any case with certainty away from walls of the mould cavity to ensure a desired thickness of the skin on the core. Consequently an improvement may be achieved with respect to all round arranging of the skin on the core in the moulding process. If a plurality of support elements are used, for example three support elements for a sphere-like core, or more support elements for more general or rectangular of square or elongate shapes of the core, the locations of contact between the core and the support elements can be relatively small. Nonetheless, any discontinuities or even holes in the skin need to be augmented or even repaired for proper use of the resulting capsules. In this respect such an embodiment of a method according to the invention may further comprise active or passive retraction of the support a time after initiating application of thermoplastic material into the mould cavity, optionally in conjunction with a base carrying the support, which may be plunger shaped, to yield under moulding pressure a space in the mould cavity for applying a skin of a desired thickness around the core. The support or support elements may be retractable after the moulding process under pressure has started. Retraction may be the result (passive) of the moulding pressure, or be an active step of engaging and retracting the support or support elements, for example using motorised engagement of the support or support element. It is especially beneficial, if the support or support elements is/are on a plunger type of base, forced by for example spring pressure towards the cavity and defining a wall thereof. As a consequence of pressure build up in the cavity, the base may be pushed against the spring force back from the core, to still define a mould cavity wall, and allow the core to be completely surrounded with thermoplastic material for the skin, without any discontinuities or even holes.

The present invention also relates to a mould having a support for the core, which may be passively or actively retractable.

Following from the above more general discussion of the present invention, herein below a detailed description of specific aspects of the present invention is set out, referring to the appended drawings of non-limiting embodiments of the present invention, wherein the same or similar aspects, components and features can be identified using the same reference numbers in different figures, and wherein:
figure 1 shows a buffer in a partly cut open view, having capsules according to the present invention inserted therein, both in the form of discrete capsules and strings or arrays of capsules;
figure 2A-2D shows steps of compressing phase change material to define a compressed core for capsules according to the present invention;
figure 3 shows preparations for the moulding process to arrange a skin on and around the compressed core of phase change material;
figure 4 shows the first step of inserting thermoplastic skin material into a mould cavity to arrange the thermoplastic skin material on and around at least a part of the predefined core of the capsule;
figure 5 shows the subsequent step after the step of figure 4, where a mould halve is replaced by another mould halve as depicted in figure 6;
figure 7 shows the second step of inserting thermoplastic skin material into the mould cavity; and
figure 8 shows extracting a string of capsules according to the present invention from the mould;
figure 9 shows a perspective view of the string or array of capsules forming an assembly in the sense of the present invention;
figure 10 shows a partly cutaway view of a single capsule according to the present invention, having a core and a skin, where the capsule in figure 10 is produced in isolation or isolated from a string or array of capsules like the one, shown in figure 9;
figure 11 shows a designed shape of a single capsule according to the present invention in side view;
figures 12 and 14 show alternative embodiments relative to the one of figure 9;
figure 13 shows an alternative embodiment relative to the one of figure 10 or 11;
figure 15 shows a perspective view of a mould part, defining four mould cavities partially;
figure 16 shows the sectional view in the direction of arrows XVI - XVI in figure 1;
figure 17 shows an alternative mould cavity shape and resulting capsule, relative to the embodiment of figures 15 and 16;
figure 18 shows an additional embodiment having a plunger like base with support elements thereon for accommodating a core of form-retaining phase changing material in a stable manner during injection moulding, based on passive retraction of support elements; and
figure 19 shows an alternative embodiment relative to figure 18, based on active retraction of support elements and without a plunger like base.

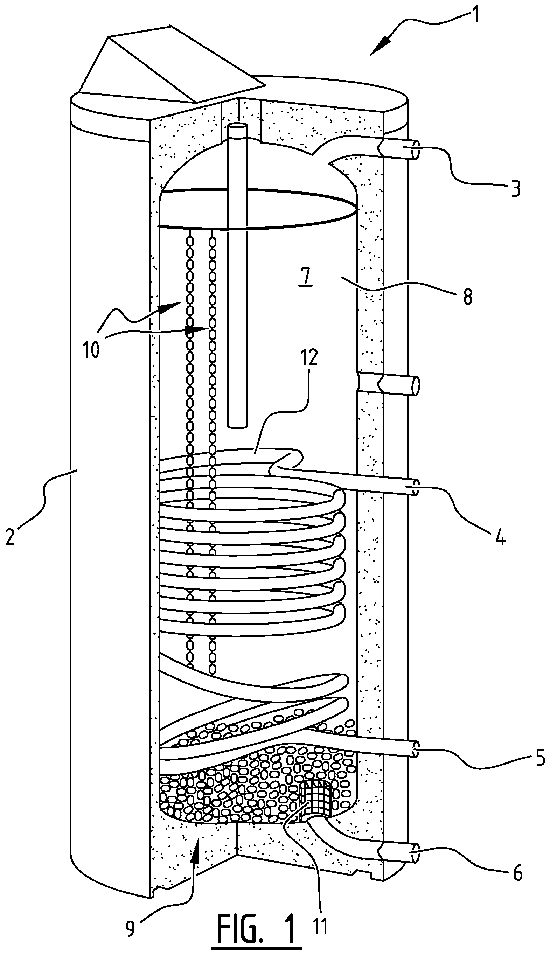

In figure 1, a buffer tank 1 according to an embodiment of the present invention is shown. The buffer tank 1 comprises enclosing walls 2, defining an interior space 7 for accommodating a heat transfer fluid 8 and discrete capsules 9 and strings or arrays of capsules 10. The interior space 7 of the buffer tank 1 may accommodate discrete capsules 9 and/or strings or arrays of capsules 10.

An input connection 3 extends through wall 2 of buffer tank 1, to allow input of heated heat exchange fluid 8, for instance water. The input connection 3 is arranged at or near the top of the buffer tank 1. At or near the bottom of the buffer tank 1 an output connection 6 is arranged. A mesh or grid 11 is provided to prevent discrete capsules 9 or strings of capsules 10 to be washed out of the interior space of the buffer tank 1.

A coiled tube or hose 12 extends between and input 4 and an output 5, through which for instance tap water can flow to heat the tap water and provide, at the output 5, heated tap water for use thereof by consumers, or as a contribution to a heating system, such as a central heating system for warming rooms of a building.

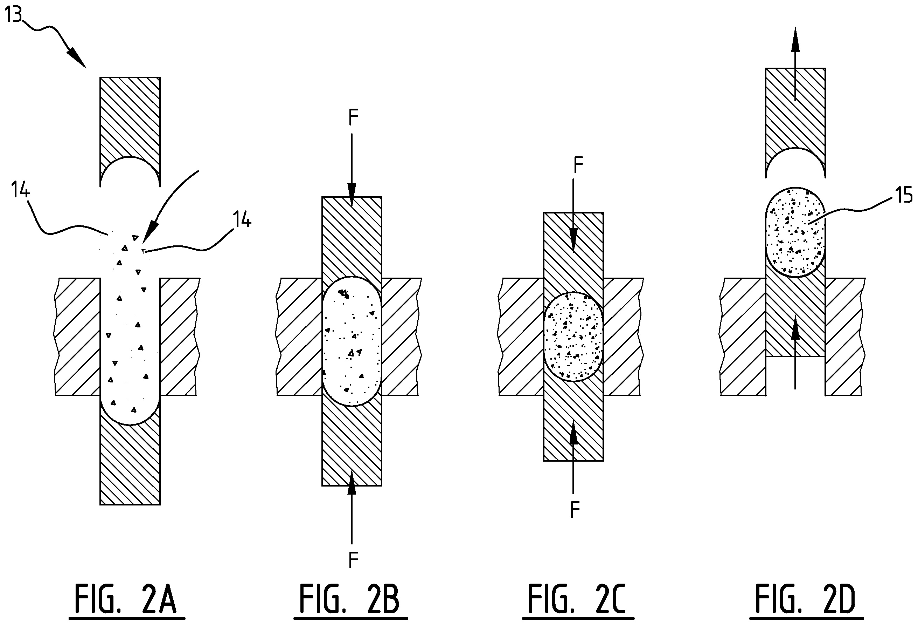

Figure 2A shows a press 13 in an opened state, where phase change material 14 is introduced into the press 13. A desired amount of graphite may be added to the phase change material 14, and/or even a binding material could be added, where it should be noted that graphite acts as a binder and also serves to enhance the heat transfer and storage capabilities of the phase change material. When a sufficient amount of phase change material 14 (and optionally also graphite and/or binding material) has been inserted into the press 13, as shown in figure 2B and figure 2C, a force F is then exerted on the phase change material 14 inside the press 13. The volume of the phase change material 14 is thereby reduced and a compressed core of phase change material for production of the capsule is obtained. By compression of the phase change material 14, a predefined shape of the core can be obtained, and moreover air is expelled from between the particles of the phase change material 14, resulting in a compact core with little remaining air therein, which air could inhibit a proper heat capacity or heat transfer capability. By expelling the air and compressing the phase change material 14, an improved core for production of capsules to be employed in the interior of the buffer tank 1 is provided.

It is noted here that according to the invention the phase change material is compressed, even if a binder is used with which it can be ensured that no heat insulating air is left in the phase change material.

A binder may comprise at least one of a plurality of materials, and merely as an example here is mentioned: graphite, hydrophilic polymers and Superabsorbent Polymers (SAP), such as polyacrylamid, polyacrylic acid, polyvinylalcohol and cellulose based polymers. For a general description of SAP, reference is made to http://en.wikipedia.org/wiki/Superabsorbent_polymer.

After compression of the phase change material 14 inside the press 13, as shown in figure 2D, the press 13 is opened to supply a pill shaped core 15 of compressed phase change material 14 for further production steps, to be described herein below (not according to the invention).

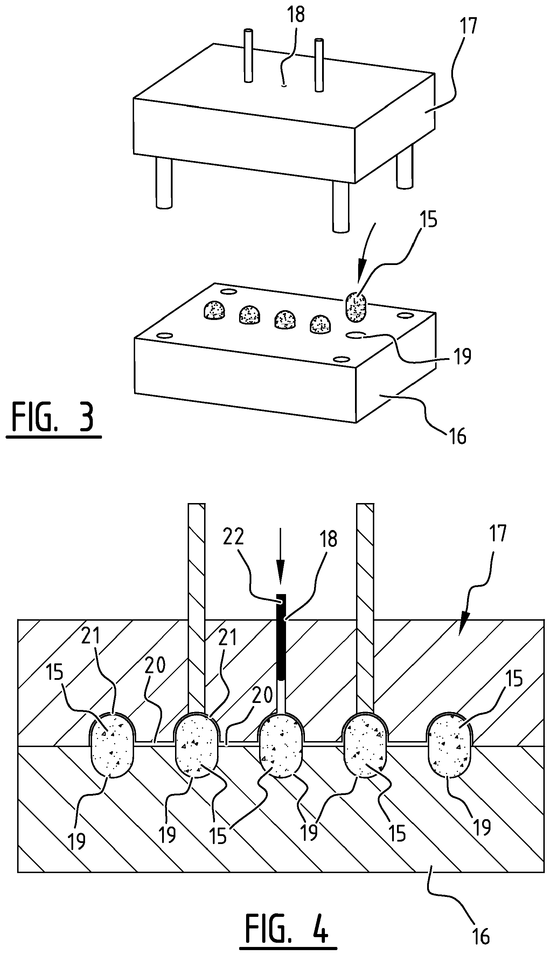

In figure 3, charging the pill shaped cores 15 into mould cavity parts 19 of a second mould halve 16 is shown. After all mould cavities 19 of the second mould halve 16 are filled with each one pill shaped core 15, a first mould halve 17 is pressed onto the second mould halve 16. The first mould halve 17 comprises slightly bigger mould cavity parts 21 then the mould cavity parts 19 of the second mould halve 16. Further, channels 20 are arranged in the first mould halve 17 between the cavity parts 21 thereof. Further, the first mould half 17 comprises an input 18 for thermoplastic material 22, to be inserted under pressure. When thermoplastic material 22 is inserted through the input 18, it flows through the channels 20 from one mould cavity part 21 to another in the direction away from the input 18. Consequently, the channels 20 are filled with thermoplastic material 22, which after the injection moulding steps remains as an extension from one pill shaped core 15 to the next, connecting the separate cores 15 and also the resulting capsules. This connection formed in the channels 20 of the first mould halve 17 is consequently formed into greatly together with the watertight skins on and around the cores 15 of phase change material 14.

Since the thermoplastic material 22 is heated in order to become fluid and allow it to be inserted through the input 18, the pill shaped cores 15 must be able to withstand some heat and moreover also the pressure generated by the input of thermoplastic material 22. The pressure, with which the pill shaped cores 15 are produced in the steps shown in figure 2A - figure 2D, impart a degree of heat resistance and more in particular also pressure resistance, sufficient to maintain the integrity as a pill shaped core 15 thereof during the subsequent step of injection moulding, as shown in figures 3-8.

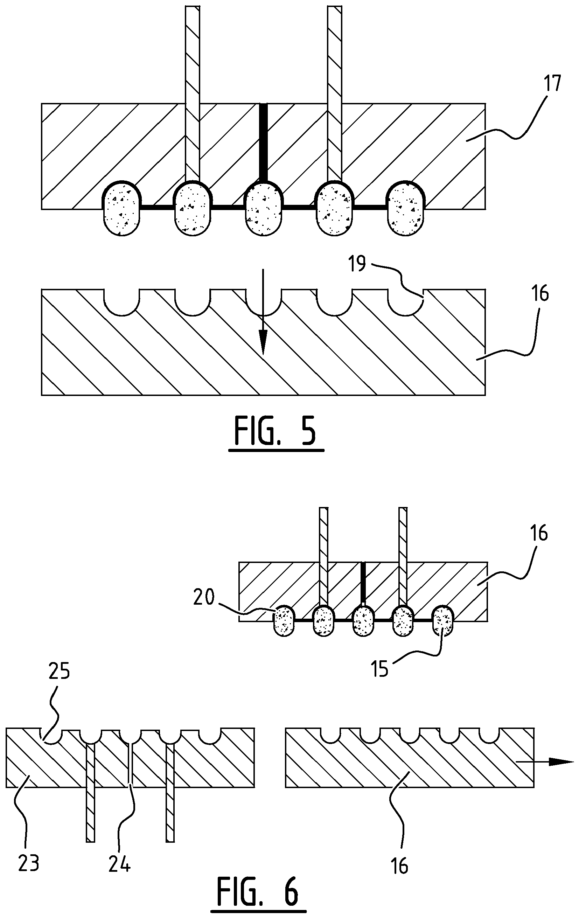

Subsequent to the step of injection moulding as shown in figure 4, the second mould halve 16 is removed, as shown in figure 5, and the second mould halve 16 is replaced by a further second mould halve 23, as shown in figure 6. The further second mould halve 23 also comprises an input 24 for thermoplastic material to form a completion of the watertight skin on and around the core 15. To achieve this, the further second mould halve 23 contains mould cavity parts 25 of the same dimensions as the mould cavity parts 21 of the first mould halve 17.

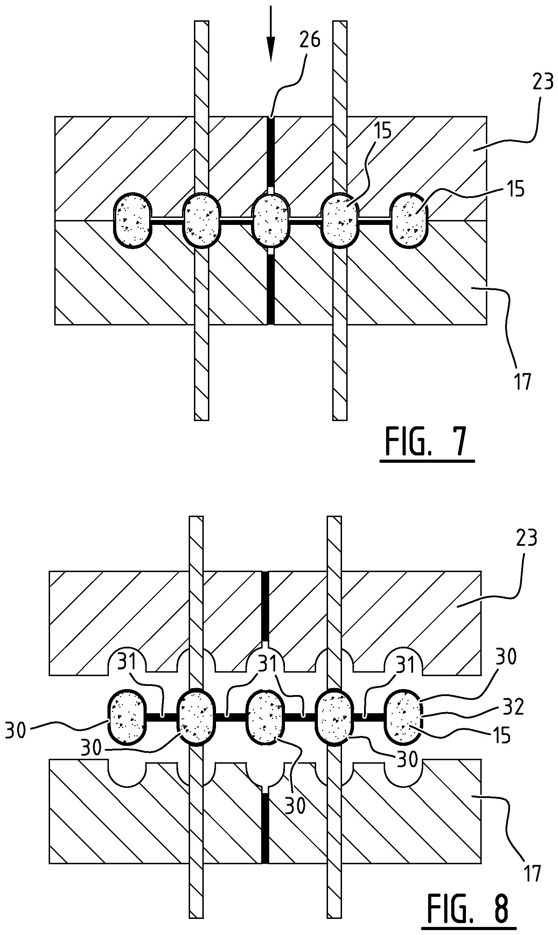

From the situation of figure 6 with the further second mould halve 23 pressed against the first mould halve 17, to arrive at the situation depicted in figure 7, the assembly of the first mould halve 17 and the further second mould halve 23 is turned upside down. Then, thermoplastic material is introduced into an input of the further second mould halve 23 to complete skins on and around the cores 15 inside the mould cavities and to also complete the connections between neighbouring pill shaped cores 15.

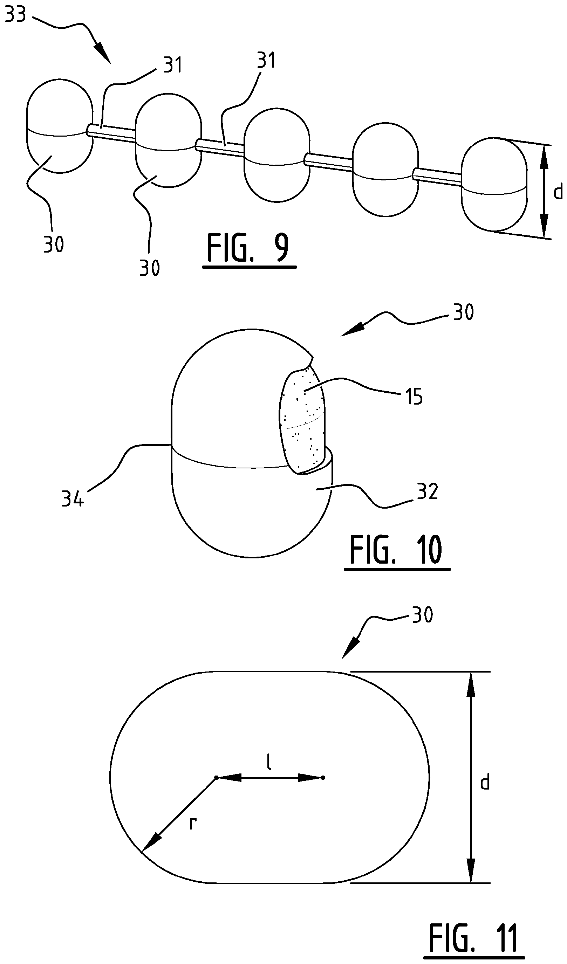

When the mould halves 17, 23 are taken apart, as shown in figure 8, a string of capsules 30, interconnected by connections 31, can be taken out of the mould. Each capsule 30 comprises the pill shaped core 15 of phase change material 14 and a watertight skin 32, that is injection moulded around the cores 15, while simultaneously creating connections 31 between neighbouring capsules 30. After release of the string or array 33 of capsules 30, as shown in perspective view in figure 9, the capsules 30 can be separated by severing the connection 31 there between, for instance by cutting or breaking. If the capsules 30 are capped in a string or array 33, as shown in figure 9, preferably the time dimension of double arrow d in figure 9 is smaller than the size of at least one access into the interior of the buffer tank 1 in figure 1. Access to the interior of the buffer tank 1 in figure 1 can be obtained through any one of the inputs 3, 4 or the outputs 5, 6 in figure 1. These input connections and output connections have, normally, standard dimensions such as 15 mm or 22 mm, and the dimension of arrow d in figure 9 is consequently preferably slightly but sufficiently less than anyone of these standard access dimensions, to allow a string or array 33 of capsules 30 to be inserted into the interior of the buffer tank 1 in figure 1 through one of the accesses 3, 4, 5, 6.

In the embodiment of figure 10 and 11, an isolated capsule 30 is shown. In figure 10 the skin 32 is partly broken away to expose the interior core 15 comprising phase changing material. The embodiment of figure 10 (not according to the invention) further also shows a separation line 34 between portions of the skin 32, where these portions are separately created in the moulding process steps shown in figure 4 and figure 7, respectively.

In figure 11 the dimension of arrow d is again depicted as a relevant dimension for allowing a capsule 30 of figure 11 to be introduced into an access into the interior of the buffer tank 1 in figure 1.

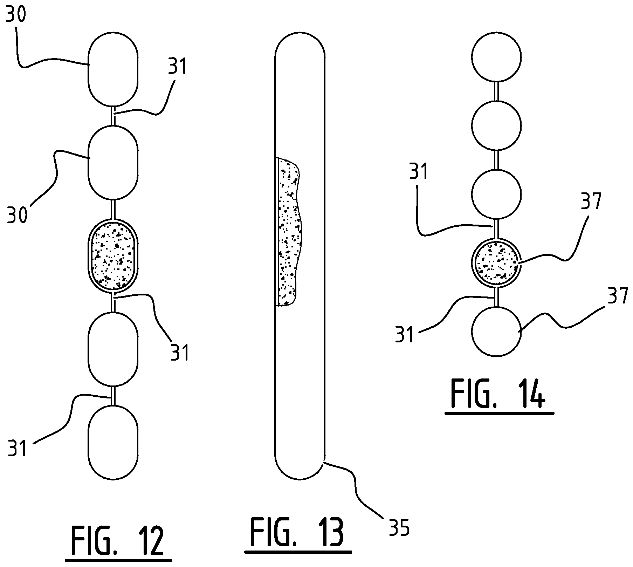

Further, figure 11 also shows a length 1 of the capsule 30 and a radius r. The radius r is half the size of the dimension of the capsule 30, to create a rounded, smooth exterior of the capsule 30. The length of the capsule 30 can be chosen freely, as is shown for instance in figure 13, where the capsule 35 is considerably longer than the capsule 30 of figure 10. As an alternative to the assembly embodiment of the string or array 33 of capsules 30, having a length dimension at a straight angle relative to the orientation of the connections 31, the length orientation of the capsules 30 could also be in line with the orientation of the connections 31, as shown in the embodiment of figure 12. Yet further as an alternative, capsules 37 can be spherical, as shown in figure 14.

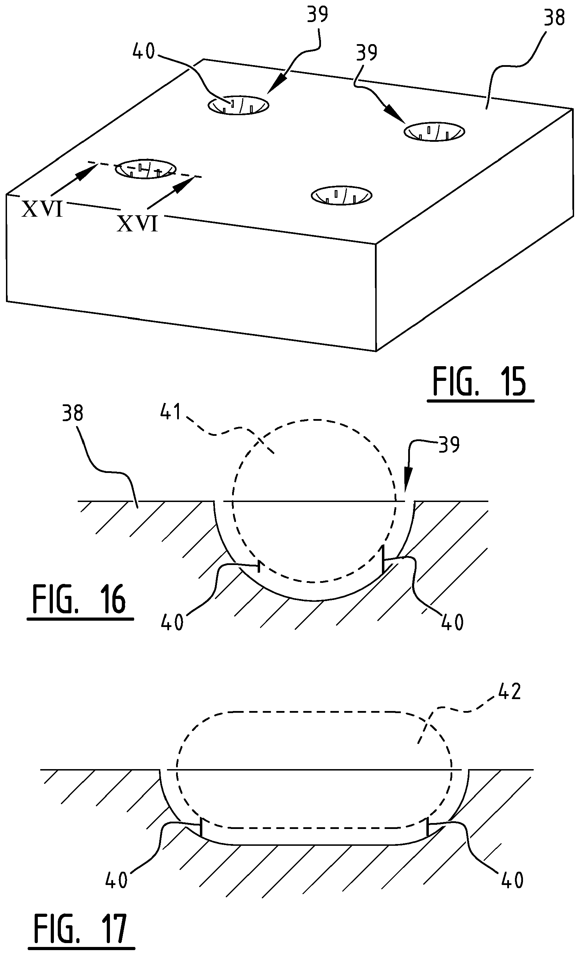

In figure 15 a mould part 38 is shown in perspective view, were the mould part 38 comprises four depressions 39, each defining a part of a mould cavity in a state, to form a complete mould cavity in combination with a further mould part (not shown in figure 15). As shown in figure 15 and in figure 16, pin-like support elements 40 are arranged in the depressions 39. Three support elements 40 are arranged in each of the depressions 39, to provide a stable accommodation for a spherical form-retaining core 41 of phase changing material. The pin like support elements 40 in the embodiment of figure 16 maintain a distance between the cavity 39 wall and the outer circumference of the spherical core 41. Likewise, in a configuration according to figure 17, four pin like support elements 14 can be employed to stably support an elongate core 42. A total of three support elements could in principle suffice to also accommodate an elongate core 42. More than four pins 40 can also be employed to support or accommodate any type or shape of core 41, 42. Consequently, injection moulding using thermoplastic material will entirely envelope the core 41. If no further measures are taken (see below) for this injection moulding process, repairs to close holes in a skin around the core 41, which may be caused by the pin-like support elements 40, will need to be performed for closing such holes. Especially if an intermediate product having a core 41 and a skin arranged their around using the moulding process as depicted in figure is 15 and 16 is taken out of a mould cavity with the skin material still in a plastic state to at least some degree, such holes can easily and simply be repaired by putting some pressure on the skin material surrounding such holes. However, this would entail a further processing step, which can be considered additional and consequently even undesirable.

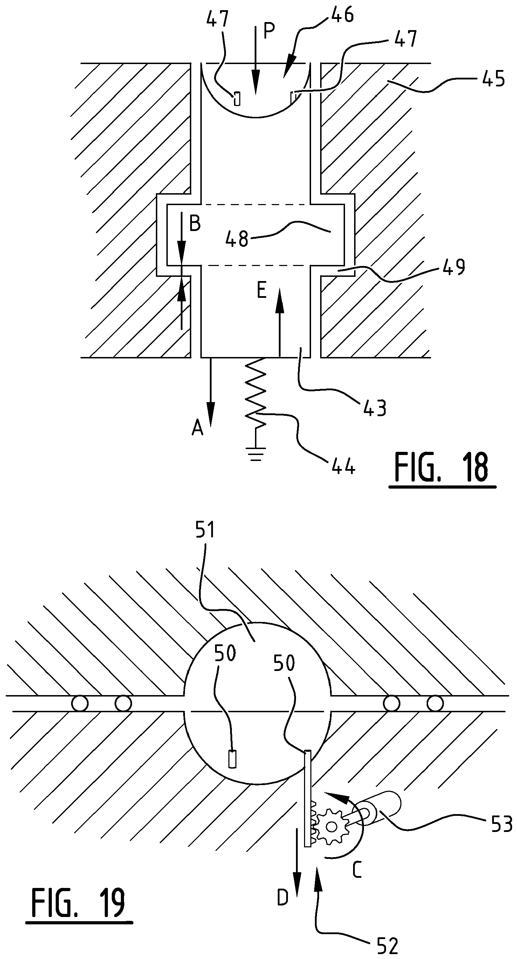

In figure 18, a mould part 45 comprises a plunger like base 43, which is pressed upwards in the mould part 45 in the direction of arrow E using a spring 44. At the top in figure 18, the plunger like base 43 comprises a depression 46, defining at least a part of the mould cavity when combined with a supplemental mould part. In the depression 46, a number of pin like support elements 47 are arranged, to support the core (not shown in figure 18) for or of a capsule during an injection moulding process. When the shown mould part 45 of figure 18 is combined with a (not shown) supplemental mould part to define a mould cavity, at least partially by the depression 46, thermoplastic material may be introduced into the mould cavity, where initially the core will be accommodated on the pin like support elements. After a short time, thermoplastic material will have surrounded the core, at which time the core will still be resting on the pin like support elements 47. As a consequence of subsequent pressure increase in the direction of generally arrow P, the plunger like base 43 will be pushed back into the mould part 45 in the direction of arrow A, contrary to those spring for its of the spring 44.

The plunger like base 43 comprises an annular ring 48, fitted in our recess 49 in the mould part 45. Enough fully extended position of the plunger like base 43, the clearance of distance B is available for movement of the plunger like base 43 in the direction of either arrow P or A. When, during the moulding process, the pressure in the mould cavity has sufficiently reason for the plunger like base 43 to recede into the body of the mould part 45, the clearance of double arrow B is available for movement of the plunger like base 43. Consequently, the clearance of double arrow B defines, restricts or limits the movement of the plunger like base 43 and core in combination with the die mention of the pin like support elements 47 defines a resulting thickness of the skin, to be arranged over and around the core of the capsule with the moulding process.

This embodiment is designated as "passive" in the sense that movement of the plunger like base 43 is initiated by pressure in the mould cavity.

In figure 19, an alternative embodiment is shown, where a first mould part and the second mould part are combined to define a mould cavity 51, where a core of phase change material can be accommodated on pin like support elements 50. Each of the pin like elements can be actively withdrawn from the cavity 51 using a transmission 52 and a drive in the form of for instance a motor 53. With the pin like support elements 50 in an extended position thereof, a core for a capsule can be accommodated thereon. Subsequently, the two mould parts can be put together to define the cavity with the core therein, and supply of thermoplastic material through an input (not shown) can be initiated. After it has been determined, that a sufficient amount of thermoplastic material is surrounding the core of the capsule, the pin like support elements 50 may be actively withdrawn in the direction of arrow D, out of contact with the core. Thermoplastic material will immediately close any space remaining after the pin like support elements 50 have been actively withdrawn, thus avoiding any need for subsequent closing of such holes or any other imperfections or discontinuities.

After the foregoing disclosure in detail of the invention, many additional and/or alternative embodiments will have become abundantly apparent to the skilled person. All such additional and/or alternative embodiments are to be considered as embodiments of the present invention in as far as such additional and/or alternative embodiments comply with the required features of at least the appended independent claims, and neither the specifically described embodiments nor the inferred alternative and/or additional embodiments are to be considered a limitation on the scope of protection as defined in the appended independent claims. For instance, the capsules can be employed in another buffer tank than the one that is depicted in figure 1. Further, a grid 11 is provided in the embodiment of figure 1 to maintain the capsules 30 inside the buffer tank, but a collection of capsules can also be arranged inside a net or the like to present the capsules from being flushed out of the buffer tank. The thickness of the skin of the capsules is preferably small to allow as much phase change material as possible to be included in the capsules, but the integrity of the watertight skins must also be ensured. For this, the skin has a thickness of between 10 and 600 µm, preferably between 20 and 580 µm, more preferably between 50 and 550 µm, and most preferably between 100 and 500 µm. Adding binder is optional. The skin comprises a skin material from PP Polypropylene.

In this respect it is further noted, that the thermoplastic material or other skin material surrounding the core of the capsules to be produced in accordance with the present invention, may have anyone of a selected or selectable number of colours. The chosen colour may coincide with and be coding for the phase change material in the core and/or a corresponding temperature range in use, after the capsules with the predetermined colours have been introduced into a vessel or tank, and thus in correspondence with the temperature is prevailing in use in said tank or vessel. As a consequence, prior to use of the capsules to be produced in accordance with the present invention, an appropriate type of capsule can be selected on the basis of the colour selected for the skin thereof and in correspondence with the temperature range in use thereof in the tank or vessel.

## Claims

1. A capsule, which is adapted to be arranged in a buffer or vessel and for selective heat storage in and/or selective heat release from the capsule, the capsule comprising: the core, comprising a particulate phase change material, and an encapsulating watertight skin arranged around the core, **CHARACTERISED IN THAT**
the core comprises, in addition to the particulate phase change material, graphite to, in a dry state thereof and without the skin, provide enhanced cohesion to the phase change material and to provide enhanced heat storage and heat transfer through the phase change material, where the encapsulating watertight skin comprises injection moulded polypropylene, which is arranged in one piece around the core of compressed particulate phase change material with graphite added thereto.

2. The capsule of claim 1, wherein a size of the capsule in at least one dimension, in particular a diameter, is smaller than 22 mm.

3. The capsule of any of the preceding claims, comprising further an extension protruding from the capsule.

4. An assembly of at least two capsules according to any one of the preceding claims, wherein the capsules are connected to form an elongate string of capsules, wherein the extension of at least one of the capsules according to claim 3 form a connection between capsules in the string.

5. A method of forming a capsule according to at least one of the preceding claims 1 - 3, or an assembly according to claim 4, comprising a step of adding graphite to the phase change material and a step of compressing the phase change material for the core to maintain a shape thereof, wherein the graphite is added to provide enhanced cohesion to the phase change material in a dry state in isolation of the core, before application of the encapsulating watertight skin onto the core for forming the capsule, wherein adding graphite comprises providing enhanced heat storage and heat transfer through the phase change material, arranging the core in a mould cavity and applying the encapsulating watertight skin in one piece by injection moulding of polypropylene into the mould cavity to arrange the thermoplastic material around the compressed particulate phase change material with the graphite added thereto.

6. The method of claim 5, wherein the step of forming the core comprises: adding binder to the phase change material.

7. The method of claim 5 or 6, comprising arranging a core of phase change material in the mould cavity part in a first mould part; closing the mould using at least one second mould part; applying a thermoplastic skin material under pressure in a first direction; and applying thermoplastic skin material under pressure in a second direction essentially opposite the first direction relative to the core in the mould cavity.

8. The method of any one of preceding claims 5 - 7, using a mould process, comprising arranging the core of phase change material on a support, which optionally comprises a plurality of support elements, in a mould cavity part in a first mould part; closing the mould using at least one second mould part, optionally also comprising a support; and applying the encapsulating watertight skin of a thermoplastic skin material under pressure to the mould cavity.

9. The method according to claim 8, further comprising active or passive retraction of the support a time after initiating application of thermoplastic material into the mould cavity, optionally in conjunction with a base carrying the support, which may be plunger shaped, to yield under moulding pressure a space in the mould cavity for applying the encapsulating watertight skin of a desired thickness around the core.

## Patentansprüche

1. Kapsel, die angepasst ist, in einem Speicher oder Kessel und zur selektiven Wärmespeicherung in und/oder zur selektiven Wärmeabgabe von der Kapsel angeordnet zu sein, wobei die Kapsel umfasst: den Kern umfassend ein aus Partikeln gebildetes Phasenwechselmaterial und eine einkapselnde wasserundurchlässige, um den Kern angeordnete Haut,
**dadurch gekennzeichnet, dass**
der Kern zusätzlich zu dem aus Partikeln gebildeten Phasenwechselmaterial Graphit umfasst, um in einem trockenen Zustand davon und ohne die Haut dem Phasenwechselmaterial eine gesteigerte Kohäsion bereitzustellen und eine gesteigerte Wärmespeicherung und Wärmeübertragung durch das Phasenwechselmaterial bereitzustellen, wobei die einkapselnde wasserundurchlässige Haut spritzgegossenes Polypropylen umfasst, das in einem Stück um den Kern aus komprimiertem, aus Partikeln gebildeten Phasenwechselmaterial mit hinzugefügtem Graphit angeordnet ist.

2. Kapsel nach Anspruch 1, wobei eine Größe der Kapsel in wenigstens einer Dimension, insbesondere einem Durchmesser kleiner als 22 mm ist.

3. Kapsel nach einem der vorangehenden Ansprüche weiter umfassend einen von der Kapsel vorstehenden Fortsatz.

4. Einheit von wenigstens zwei Kapseln gemäß einem der vorangehenden Ansprüche, wobei die Kapseln zur Bildung eines ausgedehnten Strangs aus Kapseln verbunden sind, wobei der Fortsatz wenigstens einer der Kapseln gemäß Anspruch 3 eine Verbindung zwischen Kapseln in dem Strang bildet.

5. Verfahren zur Bildung einer Kapsel gemäß wenigstens einem der vorangehenden Ansprüche 1 bis 3 oder einer Einheit gemäß Anspruch 4 umfassend einen Schritt eines Hinzufügens von Graphit zu dem Phasenwechselmaterial und einen Schritt eines Komprimierens des Phasenwechselmaterials, damit der Kern dessen Form behält, wobei das Graphit vor einer Auftragung der einkapselnden wasserundurchlässigen Haut auf den Kern zur Bildung der Kapsel hinzugefügt wird, um dem Phasenwechselmaterial in einem trockenen Zustand in Isolierung von dem Kern eine gesteigerte Kohäsion bereitzustellen, wobei Hinzufügen von Graphit ein Bereitstellen einer gesteigerten Wärmespeicherung und Wärmeübertragung durch das Phasenwechselmaterial umfasst, wobei der Kern in einem Formhohlraum angeordnet wird und wobei die einkapselnde wasserundurchlässige Haut in einem Stück durch Spritzgießen von Polypropylen in den Formhohlraum aufgetragen wird, um das thermoplastische Material um das komprimierte, aus Partikeln gebildete Phasenwechselmaterial mit dem hinzugefügtem Graphit anzuordnen.

6. Verfahren nach Anspruch 5, wobei der Schritt des Bildens des Kerns umfasst: Hinzufügen eines Bindemittels zu dem Phasenwechselmaterial.

7. Verfahren nach Anspruch 5 oder 6, umfassend ein Anordnen eines Kerns des Phasenwechselmaterials in dem Abschnitt des Formhohlraums in einem ersten Formteil, Schließen der Form unter Benutzung wenigstens eines zweiten Formteils, Auftragen eines thermoplastischen Hautmaterials unter Druck in einer ersten Richtung und Auftragen von thermoplastischem Hautmaterial unter Druck in einer zweiten, der ersten Richtung relativ zu dem Kern in dem Formhohlraum im Wesentlichen entgegengesetzten Richtung.

8. Verfahren nach einem der Ansprüche 5 bis 7, wobei ein Spritzprozess benutzt wird, umfassend Anordnen des Kerns aus Phasenwechselmaterial auf einer Stütze, die optional eine Vielzahl von Stützelementen umfasst, in einem Abschnitt des Formhohlraums in einem ersten Formteil, Schließen der Form unter Benutzung wenigstens eines zweiten Formteils, optional auch umfassend eine Stütze, und Auftragen der einkapselnden wasserundurchlässigen Haut aus einem thermoplastischen Hautmaterial unter Druck in den Formhohlraum.

9. Verfahren gemäß Anspruch 8, weiter umfassend ein aktives oder passives Zurückziehen der Stütze eine Zeit nach einem Beginnen des Auftragens des thermoplastischen Materials in den Formhohlraum, optional in Verbindung mit einer die Stütze tragenden Unterlage, die kolbenförmig sein kann, um unter Spritzdruck einen Raum in dem Formhohlraum zum Auftragen der einkapselnden, wasserundurchlässigen Haut einer gewünschten Dicke um den Kern hervorzubringen.

## Revendications

1. Capsule, qui est adaptée pour être placée dans un tampon ou un réservoir, et destinée au stockage de chaleur sélectif et/ou à une libération de chaleur sélective de la capsule, la capsule comprenant : le noyau, comprenant un matériau particulaire à changement de phase, et un revêtement d'encapsulation étanche à l'eau placé autour du noyau,
**caractérisée en ce que**
le noyau comprend, en plus du matériau particulaire à changement de phase, du graphite destiné, dans un état sec de celui-ci et sans le revêtement, à assurer une meilleure cohésion avec le matériau à changement de phase, et à garantir un meilleur stockage de chaleur et un meilleur transfert de chaleur par le biais du matériau à changement de phase, le revêtement d'encapsulation étanche à l'eau comprenant du polypropylène moulé par injection, qui est placé d'un seul tenant autour du noyau en matériau particulaire à changement de phase compressé, avec du graphite collé dessus.

2. Capsule selon la revendication 1, dans laquelle une taille de la capsule dans au moins une dimension, et en particulier un diamètre, est inférieure à 22 mm.

3. Capsule selon l'une quelconque des revendications précédentes, comprenant en outre une extension qui sort de la capsule.

4. Ensemble d'au moins deux capsules selon l'une quelconque des revendications précédentes, dans lequel les capsules sont reliées afin de former une chaîne allongée de capsules, l'extension d'au moins l'une des capsules selon la revendication 3 formant une liaison entre les capsules de la chaîne.

5. Procédé de formation d'une capsule selon au moins l'une des revendications 1 à 3, ou d'un ensemble selon la revendication 4, comprenant une étape d'ajout de graphite au matériau à changement de phase, et une étape de compression du matériau à changement de phase destiné au noyau afin de maintenir une forme de celui-ci, le graphite étant ajouté afin d'améliorer la cohésion au matériau à changement de phase dans un état sec au sein de l'isolation du noyau, avant l'application du revêtement d'encapsulation étanche à l'eau sur le noyau de façon à former la capsule, l'ajout de graphite comprenant le fait de prévoir un meilleur stockage de la chaleur et un meilleur transfert de la chaleur par le biais du matériau à changement de phase, le placement du noyau dans une cavité de moule, et l'application du revêtement d'encapsulation étanche à l'eau d'un seul tenant par moulage par injection de polypropylène dans la cavité de moule de façon à placer le matériau thermoplastique autour du matériau particulaire à changement de phase compressé, avec le graphite collé dessus.

6. Procédé selon la revendication 5, dans lequel l'étape de formation du noyau comprend : l'ajout d'un liant au matériau à changement de phase.

7. Procédé selon la revendication 5 ou 6, comprenant le placement d'un noyau en matériau à changement de phase dans la partie de cavité de moule dans une première partie de moule ; la fermeture du moule à l'aide d'au moins une seconde partie de moule ; l'application d'un matériau de revêtement thermoplastique sous pression dans une première direction ; et l'application d'un matériau de revêtement thermoplastique sous pression dans une seconde direction essentiellement opposée à la première direction par rapport au noyau dans la cavité de moule.

8. Procédé selon l'une quelconque des revendications 5 à 7, qui utilise un processus de moulage, comprenant le placement du noyau en matériau à changement de phase sur un support, qui comprend en option une pluralité d'éléments de support, dans une partie de cavité de moule dans une première partie de moule ; la fermeture du moule à l'aide d'au moins une seconde partie de moule, comprenant également en option un support ; et l'application du revêtement d'encapsulation étanche à l'eau sous pression sur la cavité de moule.

9. Procédé selon la revendication 8, comprenant en outre une rétraction active ou passive du support au bout d'une certaine durée après le début de l'application du matériau thermoplastique dans la cavité de moule, optionnellement en conjonction avec une base portant le support, qui peut être en forme de plongeur, afin d'obtenir, sous la pression de moulage, un espace dans la cavité de moule qui permet d'appliquer le revêtement d'encapsulation étanche à l'eau selon une épaisseur souhaitée autour du noyau.
